# EUROPEAN PATENT APPLICATION

(11) **EP 4 684 701 A1**
(43) Date of publication of application: **28.01.2026**
(21) Application number: 25191288.7
(22) Date of filing: 23.07.2025
(51) Int. Cl.: A47J 31/44, A47J 31/46, A47J 31/52

(54) **BEVERAGE DEVICE AND CONTROL METHOD THEREOF**

(30) Priority: 26.07.2024 CN 202411017970
(71) Applicant: Kalerm Technology (Suzhou) Co., Ltd, Suzhou Jiangsu 215134 (CN)
(72) Inventor: WU, Yuanhu, Suzhou, Jiangsu 215134 (CN); SHU, Hebo, Suzhou, Jiangsu 215134 (CN); LU, Dean, Suzhou, Jiangsu 215134 (CN)
(74) Representative: Winter, Brandl - Partnerschaft mbB

(57) **Abstract**

The present application provides a beverage device and a control method thereof. The beverage device comprises: a brewing unit, configured to generate beverages within a first temperature range; a first cooling unit including a first cooling channel and a first cooling medium channel; under an action of a cooling medium in the first cooling medium channel, the beverages flowing through the first cooling channel are cooled to become beverages within a second temperature range; a second cooling unit including a second cooling channel and a second cooling medium channel, wherein liquid flowing through the second cooling channel is capable of cooling the cooling medium in the second cooling medium channel; the cooling medium in the second cooling medium channel and the cooling medium in the first cooling medium channel can be at least partially exchanged. The beverage device can provide cooling functionality for beverages.

## Description

### TECHNICAL FIELD

The present application relates to the field of beverage devices, specifically to a beverage device and a control method thereof.

### BACKGROUND

With improvement of people's living standards, beverage devices such as coffee machines are increasingly used in daily life. Consumer demands are often diverse, and there can be significant differences in consumers' temperature requirements for beverages across different seasons.

To adapt to consumers' diverse needs, beverage devices with more functions need to be provided.

### SUMMARY

Multiple embodiments of the present application provide a beverage device and a control method thereof. The beverage device can have a functionality of cooling beverages. The invention is set out in the appended set of claims.

In one aspect, an embodiment of the present application provides a beverage device capable of generating beverages within a first temperature range and beverages within a second temperature range. The beverage device comprises: a brewing unit, configured to brew raw materials into beverages within the first temperature range; the brewing unit having a brewing chamber for accommodating the raw materials; the brewing unit further having a liquid inlet and a liquid outlet; both the liquid inlet and the liquid outlet being in communication with the brewing chamber; a first liquid outlet pipeline being in communication with the liquid outlet and configured to output beverages within the first temperature range; the beverage device further comprises a first cooling unit and a second cooling unit. The first cooling unit comprises a first cooling channel and a first cooling medium channel, the first cooling channel is in thermal contact with a cooling medium in the first cooling medium channel; an input port of the first cooling channel is capable of communicating with the first liquid outlet pipeline; under an action of the cooling medium in the first cooling medium channel, the beverages within the first temperature range flowing through the first cooling channel are cooled to become beverages within the second temperature range, wherein a maximum value of the second temperature range is lower than a minimum value of the first temperature range. The second cooling unit comprises a second cooling channel and a second cooling medium channel, the second cooling channel being in thermal contact with a cooling medium in the second cooling medium channel; liquid flowing through the second cooling channel is capable of cooling the cooling medium in the second cooling medium channel; wherein an inlet of the first cooling medium channel is capable of communicating with an outlet of the second cooling medium channel, an outlet of the first cooling medium channel is capable of communicating with an inlet of the second cooling medium channel, so that the cooling medium in the second cooling medium channel and the cooling medium in the first cooling medium channel can be at least partially exchanged.

In another aspect, an embodiment of the present application provides a control method for a beverage device, wherein the beverage device comprises a brewing unit, a first cooling unit and a second cooling unit; the first cooling unit having a first cooling channel and a first cooling medium channel, the first cooling channel and the first cooling medium channel being in thermal contact; the second cooling unit having a second cooling channel and a second cooling medium channel, the second cooling channel and the second cooling medium channel being in thermal contact; the control method comprises: generating beverages within a first temperature range through the brewing unit; directing the beverages within the first temperature range to flow through the first cooling channel; wherein, under an action of the cooling medium in the first cooling medium channel, the beverages within the first temperature range flowing through the first cooling channel are cooled to become beverages within the second temperature range, wherein a maximum value of the second temperature range is lower than a minimum value of the first temperature range; driving the cooling medium in the first cooling medium channel to flow into the second cooling medium channel, and driving the cooling medium in the second cooling medium channel to flow into the first cooling medium channel, to enable at least partial exchange between the cooling medium in the second cooling medium channel and the cooling medium in the first cooling medium channel.

### BRIEF DESCRIPTION OF DRAWINGS

FIG. 1A shows a water circuit diagram of a beverage device according to an embodiment of the present application;
FIG. 1B shows a flow direction diagram of cooling medium circulation in a circulation loop of the water circuit shown in FIG. 1A;
FIG. 1C shows a flow direction diagram when discharging cooling medium from the circulation loop of the water circuit shown in FIG. 1A;
FIG. 1D shows a flow direction diagram when injecting water into the circulation loop of the water circuit shown in FIG. 1A;
FIG. 2 shows a water circuit diagram of a beverage device according to another embodiment of the present application; and
FIG. 3 shows a flow chart of a control method for a beverage device according to an embodiment of the present application.

### DETAILED DESCRIPTION OF EMBODIMENTS

The technical solutions in embodiments of the present application will be described clearly and completely in conjunction with drawings in the embodiments of the present application. Obviously, the described embodiments are only a part of the embodiments of the present application, not all of the embodiments.

In the present application, the drawings are not necessarily drawn to scale, and local features may be enlarged or reduced to show the details of local features more clearly.

In related technology, beverage devices can quickly and conveniently prepare beverages. Taking a coffee machine as an example of a beverage device, the coffee machine uses coffee beans or coffee powder as raw materials to make coffee beverages. Usually, when preparing coffee beverages, hot water flows through coffee powder, resulting in a high temperature of the prepared coffee beverage. Users need to drink the high-temperature coffee beverage slowly or wait until it cools down to a suitable temperature before drinking.

In some cases, users' demands for beverages can be diverse. For example, not every user needs high-temperature coffee beverages, or has much time or patience to wait for the coffee beverage to cool down. Therefore, manufacturers have begun to develop beverage devices with beverage cooling functionality.

Technicians have installed cooling mechanisms in beverage devices to cool high-temperature beverages flowing through them to obtain cooled beverages. However, technicians found that when using water as a cooling medium in the cooling mechanism, the cooling effect would weaken after making several cups of cooled beverages in a short time, due to the increased temperature of the cooling medium in the cooling mechanism.

At this point, for the beverage device to continue making a next cup of beverage that needs cooling, the cooling medium in the cooling mechanism needs to be replaced, otherwise, the heated cooling medium would find it difficult to cool the high-temperature beverage to a desired temperature. Although water can be used as a cooling medium, directly using cold water from the water supply pipeline as cooling medium to directly replace the heated cooling medium in the cooling mechanism can achieve convenient replacement of the cooling medium in the cooling mechanism, during this process, the original cooling medium in the cooling mechanism would be directly discharged from the waste discharge pipeline, which obviously would cause water waste.

Based on this, the inventor of the present application proposes a beverage device comprising two cooling units, namely a first cooling unit and a second cooling unit. The first cooling unit has a first cooling channel and a first cooling medium channel, with the first cooling channel and the first cooling medium channel being in thermal contact. The second cooling unit has a second cooling channel and a second cooling medium channel, with the second cooling channel and the second cooling medium channel being in thermal contact. An inlet of the first cooling medium channel can communicate with an outlet of the second cooling medium channel, and an outlet of the first cooling medium channel can communicate with an inlet of the second cooling medium channel, enabling at least partial exchange between the cooling medium in the second cooling medium channel and the cooling medium in the first cooling medium channel. This reduces the temperature of the cooling medium in the first cooling unit, enhancing the device's ability to produce cooled beverages.

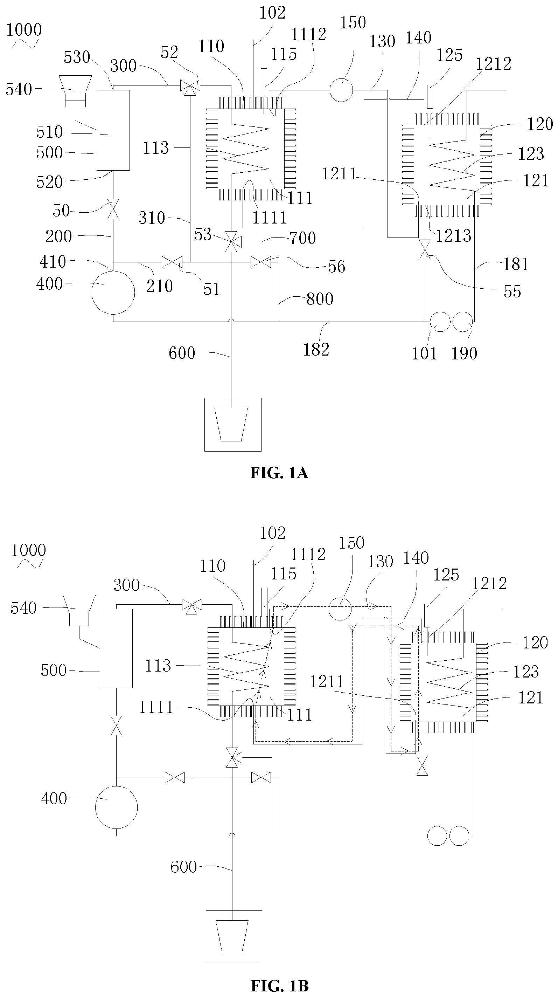

Referring to FIG. 1A, a beverage device 1000 provided in an embodiment of the present application can generate beverages within a first temperature range and beverages within a second temperature range. Specifically, the beverage device includes a brewing unit 500, a first liquid outlet pipeline 300, a first cooling unit 110, and a second cooling unit 120.

The brewing unit 500 is configured to brew raw materials into beverages within the first temperature range. The brewing unit 500 has a brewing chamber 510 for accommodating raw materials; the brewing unit 500 further has a liquid inlet 520 and a liquid outlet 530; both the liquid inlet 520 and the liquid outlet 530 communicate with the brewing chamber 510. The first liquid outlet pipeline 300 communicates with the liquid outlet 530, configured to output beverages within the first temperature range. The brewing unit 500 requires hot water to make beverages, resulting in beverages flowing out of the brewing unit 500 being in a relatively high-temperature state. Specifically, the first temperature range can be 55°C~90°C. Preferably, the first temperature range can be 65°C~80°C.

The first cooling unit 110 has a first cooling channel 113 and a first cooling medium channel 111, with the first cooling channel 113 being in thermal contact with the cooling medium in the first cooling medium channel 111; an input port of the first cooling channel 113 can communicate with the first liquid outlet pipeline 300; under an action of the cooling medium in the first cooling medium channel 111, beverages within the first temperature range flowing through the first cooling channel 113 are cooled to beverages within the second temperature range, where the maximum value of the second temperature range is lower than the minimum value of the first temperature range. Specifically, the second temperature range can be 15°C~45°C. Preferably, the second temperature range can be closer to room temperature, ranging from 20°C~35°C.

The second cooling unit 120 has a second cooling channel 123 and a second cooling medium channel 121, with the second cooling channel 123 and the second cooling medium channel 121 being in thermal contact; liquid flowing through the second cooling channel 123 is capable of cooling the cooling medium in the second cooling medium channel 121.

An inlet 1111 of the first cooling medium channel 111 is capable of communicating with an outlet 1212 of the second cooling medium channel 121, and an outlet 1112 of the first cooling medium channel 111 is capable of communicating with an inlet 1211 of the second cooling medium channel 121, thereby enabling at least partial exchange between the cooling medium in the second cooling medium channel 121 and the cooling medium in the first cooling medium channel 111.

The first cooling unit 110 is used for cooling treatment of beverages. The second cooling unit 120 is used for cooling treatment of the cooling medium in the first cooling medium channel 111.

It should be noted that thermal contact between the first cooling channel 113 and the first cooling medium channel 111 means thermal contact between the beverage in the first cooling channel 113 and the cooling medium in the first cooling medium channel 111. The cooling medium in the first cooling medium channel 111 needs to be isolated from the beverage in the first cooling channel 113. The structure between the first cooling medium channel 111 and the first cooling channel 113 has thermal conductivity, enabling heat exchange between the cooling medium and the beverage without physical contact. Similarly, thermal contact between the second cooling channel 123 and the second cooling medium channel 121 means thermal contact between the medium in the second cooling channel 123 and the cooling medium in the second cooling medium channel 121. The cooling medium in the second cooling medium channel 121 needs to be isolated from the liquid in the second cooling channel 123. The structure between the second cooling medium channel 121 and the second cooling channel 123 has thermal conductivity, enabling heat exchange between the cooling medium in the second cooling medium channel 121 and the medium in the second cooling channel 123 without physical contact.

The beverage device 1000 is equipped with the first cooling unit 110 and the second cooling unit 120, and capable of cooling beverages within the first temperature range using the cooling medium in the first cooling unit 110 to obtain beverages within the second temperature range. Furthermore, after preparing beverages within the second temperature range, by exchanging the cooling medium between the first cooling unit 110 and the second cooling unit 120, the temperature of the cooling medium in the first cooling unit 110 can be reduced, enabling the first cooling unit 110 to continue cooling beverages from the first temperature range to the second temperature range. This allows for repeated production of beverages within the second temperature range.

In a specific example, taking the beverage device 1000 as a coffee machine, the coffee machine can produce a same type of beverage at two different temperature ranges, such as "espresso beverages". "Espresso beverages" can be classified into hot drinks within the first temperature range and cold drinks within the second temperature range.

The cooling medium and beverages are not structures of the beverage device 1000 itself, but are inputs during the use of the beverage device 1000, and do not constitute limitations on the scope of protection of this application.

Moreover, the second cooling unit 120 cools the cooling medium in the first cooling unit 110 through heat exchange, requiring no electrical energy conversion to thermal energy, nor internal combustion engine drive or other conversions to required thermal energy, meaning no additional energy is needed. Additionally, this structure is relatively simple.

The first cooling channel 113, first cooling medium channel 111, second cooling channel 123, and second cooling medium channel 121 are all channels for liquid passage, which can be pipeline lumens or cavities in shells; they can be channels of regular or irregular shapes.

In this embodiment, the beverage device 1000 further includes a heating unit 400; the inlet of the second cooling channel 123 is configured to connect to a water source. The beverage device 1000 further includes a first water supply pipeline 181 and a second water supply pipeline 182 which are both connected to the outlet of the second cooling channel 123. The first water supply pipeline 181 is used to supply water to the first cooling medium channel 111 and the second cooling medium channel 121. The second water supply pipeline 182 is connected to the inlet of the heating unit 400, and the hot water outlet 410 of the heating unit 400 is capable of connecting with the liquid inlet 520 of the brewing chamber 510.

Thus, water flowing out of the second cooling channel 123 can be used to supply water to both the first cooling medium channel 111 and second cooling medium channel 121, as well as to supply water to the heating unit 400, allowing the water in the second cooling channel 123 to be reused. Since the water flowing out of the second cooling channel 123 can be used for both supplying water to the cooling medium channels and the heating unit 400, the water from the second cooling channel 123 has wide applications, so there's no need to wait for the water in the second cooling channel 123 to reach a higher temperature before discharging it, thus ensuring good cooling effect of the second cooling unit 120. Additionally, this process allows the water in the second cooling channel 123 to be reused, avoiding water waste.

In this embodiment, the second water supply pipeline 182 connects to the outlet of the second cooling channel 123 through the first water supply pipeline 181. Of course, in other feasible embodiments, the second water supply pipeline 182 can also connect directly to the outlet of the second cooling channel 123, or connect through other pipelines.

In some embodiments, the beverage device 1000 further comprises a first hot water pipeline 200 and a second hot water pipeline 210 which are both connected to an outlet of the heating unit 400, and a beverage outlet 600 capable of connecting to the first cooling channel 113. The first hot water pipeline 200 connects to the liquid inlet 520 of the brewing chamber 510; the second hot water pipeline 210 connects to the beverage outlet 600; wherein the beverage device 1000 is capable of controllably directing hot water heated by the heating unit 400 to flow through the first hot water pipeline 200 into the brewing chamber 510, or directing the hot water to flow through the second hot water pipeline 210 and flow out from the beverage outlet 600.

The hot water flowing through the first hot water pipeline 200 into the brewing chamber 510 is used to prepare beverages within the first temperature range. The hot water flowing through the second hot water pipeline 210 to flow out from the beverage outlet 600 is used separately as hot water, or can be added to beverages for dilution.

Specifically, the first hot water pipeline 200 is equipped with a valve 50, and the second hot water pipeline 210 is equipped with a valve 51. Thus, the beverage device 1000 controls a connection between the heating unit 400 and the brewing unit 500 by controlling the on-off state of the valve 50 in the first hot water pipeline 200. Additionally, the beverage device 1000 controls a connection between the heating unit 400 and the beverage outlet 600 by controlling the on-off state of the valve 51 in the second hot water pipeline 210.

In this embodiment, the beverage device 1000 further comprises a second liquid outlet pipeline 310 connected to the beverage outlet 600. The beverage device 1000 is capable of controllably connecting the second liquid outlet pipeline 310 with the first liquid outlet pipeline 300, thereby allowing beverages within the first temperature range to flow through the first liquid outlet pipeline 300 and the second liquid outlet pipeline 310 to the beverage outlet 600. Alternatively, the beverage device 1000 is capable of controllably connecting the first liquid outlet pipeline 300 with the first cooling channel 113, and connecting the first cooling channel 113 with the beverage outlet 600, thereby allowing beverages within the first temperature range to flow into the first cooling channel 113, be cooled to beverages within the second temperature range, and then flow out from the beverage outlet 600.

Beverages flowing out through the first liquid outlet pipeline 300, second liquid outlet pipeline 310, and beverage outlet 600 in sequence are beverages within the first temperature range. Beverages flowing out through the first liquid outlet pipeline 300, first cooling channel 113, and beverage outlet 600 in sequence are beverages within the second temperature range.

Specifically, in this embodiment, the beverage device 1000 comprises a hot beverage flow control valve 52 connected to the first liquid outlet pipeline 300. The beverage device 1000 selectively controls hot beverages through the hot beverage flow control valve 52 to be transported through the first liquid outlet pipeline 300 to the first cooling channel 113, or controls hot beverages to be transported through the second liquid outlet pipeline 310 to be directly discharged from the beverage outlet 600. Specifically, the hot beverage flow control valve 52 is a three-way valve, enabling it to be controlled to connect the first liquid outlet pipeline 300 with the second liquid outlet pipeline 310, or to connect the first liquid outlet pipeline 300 with an inlet of the first cooling channel 113.

In this embodiment, the beverage device 1000 further comprises a first cooling medium pipeline 130, a second cooling medium pipeline 140, and a circulation driving mechanism 150. The first cooling medium pipeline 130 connects with the outlet 1112 of the first cooling medium channel 111 and the inlet 1211 of the second cooling medium channel 121. The second cooling medium pipeline 140 connects with the outlet 1212 of the second cooling medium channel 121 and the inlet 1111 of the first cooling medium channel 111.

The first cooling medium channel 111, first cooling medium pipeline 130, second cooling medium channel 121, and second cooling medium pipeline 140 form a circulation loop for the cooling medium. The circulation driving mechanism 150 provides power for the circulation flow of cooling medium in the circulation loop. Through the circulation loop setup, the cooling medium in the first cooling medium channel 111 of the first cooling unit 110 flows to the second cooling medium channel 121 of the second cooling unit 120, where it is cooled through thermal contact with the cooling medium in the second cooling channel 123. The cooled cooling medium in the second cooling medium channel 121 is then transported back to the first cooling medium channel 111 of the first cooling unit 110.

In this embodiment, the inlet 1111 of the first cooling medium channel 111 is located at a bottom end of the first cooling unit 110, and the outlet 1112 of the first cooling medium channel 111 is located at a top end of the first cooling unit 110. Thus, the closer to the bottom end of the first cooling unit 110, the relatively lower the temperature of the cooling medium. Additionally, when the beverage device 1000 is in use, along the direction of gravity, the flow direction of beverages in the first cooling unit 110 points toward the bottom end of the first cooling unit 110. The lower the temperature at the bottom end of the first cooling unit 110, the better the cooling effect on the beverages.

Additionally, with the inlet 1111 of the first cooling medium channel 111 located at the bottom end of the first cooling unit 110 and the outlet 1112 at the top end, the closer to the bottom end of the first cooling unit 110, the lower the cooling medium temperature; the closer to the top end, the higher the temperature. With the outlet 1112 located at the top end of the first cooling unit 110, when outputting cooling medium from the first cooling medium channel 111, the higher-temperature portion can be output first, leaving the lower-temperature cooling medium in the first cooling medium channel 111, thereby maintaining better cooling effectiveness of the first cooling unit 110.

Moreover, the inlet 1111 of the first cooling medium channel 111 is locating at the bottom end of the first cooling unit 110 and the outlet 1112 at the top end, thereby causing the cooling medium in the first cooling medium channel 111 to gradually move upward during the output process, while the lower-temperature cooling medium provided by the second cooling unit 120 entering the first cooling medium channel 111 from the bottom, maintaining the temperature gradient where the cooling medium temperature is lower closer to the bottom of the first cooling unit 110, thus better maintaining the cooling effect of the first cooling unit 110.

In this embodiment, the first cooling unit 110 is equipped with a liquid level detection device 115 at its top end to detect a liquid level of cooling medium in the first cooling medium channel 111. After multiple circulation cycles, as the cooling medium temperature rises and expands, the liquid level in the first cooling medium channel 111 increases. When the liquid level detection device 115 detects that the liquid level reaches a preset level, some cooling medium can be discharged through the second medium discharge pipeline 102 to prevent excessive pressure in the circulation loop.

Furthermore, with the outlet 1112 of the first cooling medium channel 111 located at the top end of the first cooling unit 110, the cooling medium in the first cooling unit 110 can only flow out from the first cooling medium channel 111 under an action of the circulation driving mechanism 150 when the cooling medium liquid level reaches the preset level, thus ensuring sufficient cooling medium volume in the first cooling medium channel 111.

In this embodiment, the inlet 1211 of the second cooling medium channel 121 is located at a bottom end of the second cooling unit 120, and the outlet 1212 is located at a top end.

With this arrangement, when the cooling medium liquid level in the second cooling medium channel 121 reaches the preset level, the cooling medium can be output from the second cooling medium channel 121, ensuring sufficient cooling of the cooling medium in the second cooling unit 120.

Moreover, with both cooling medium channels having their inlets at the bottom and outlets at the top of their respective units, the cooling medium can flow out from the outlet 1112 of the first cooling medium channel 111 when the liquid level reaches the preset level (for example, when the cooling medium fills the first cooling medium channel 111). Similarly, the cooling medium flows out from the outlet 1212 of the second cooling medium channel 121 when its liquid level reaches the preset level (for example, when the cooling medium fills the second cooling medium channel 121). Thus, the cooling medium can circulate when the circulation loop is approximately full.

In this embodiment, the circulation driving mechanism 150 is a pump. In other feasible embodiments, the circulation driving mechanism is not limited to pumps but can be any mechanism capable of driving the flow of cooling medium in the circulation loop. In some embodiments, the circulation driving mechanism 150 is installed on the first cooling medium pipeline 130.

Please refer to FIG. 1A and FIG. 1B together. In one scenario example, after the beverage device 1000 completes making one cup of beverage within the second temperature range, it can perform one cooling medium exchange between the first cooling unit 110 and the second cooling unit 120. For example, after the beverage device 1000 makes one cup of cold "espresso". Of course, the one cooling medium exchange between the first cooling unit 110 and the second cooling unit 120 can also be performed after the beverage device 1000 making two cups, three cups, or more cups of beverage within the second temperature range.

Specifically, the beverage device 1000 is capable of activating the circulation driving mechanism 150 to drive the cooling medium to flow in the circulation loop, achieving the exchange of cooling medium between the first cooling unit 110 and the second cooling unit 120. During the flow of cooling medium in the circulation loop, the water flow direction is shown as dashed lines with arrows in FIG. 1B.

The beverage device 1000 controls a volume of cooling medium exchanged between the first cooling unit 110 and the second cooling unit 120 by controlling a working duration of the circulation driving mechanism 150. For example, the beverage device 1000 controls the circulation driving mechanism 150 to run for a preset duration, making the volume of exchanged cooling medium approximately equal to the capacity of the first cooling unit 110. Thus, after controlling the exchange of cooling medium between the first cooling unit 110 and the second cooling unit 120, the beverage device 1000 is capable of continuing to prepare a next cup of cold beverage.

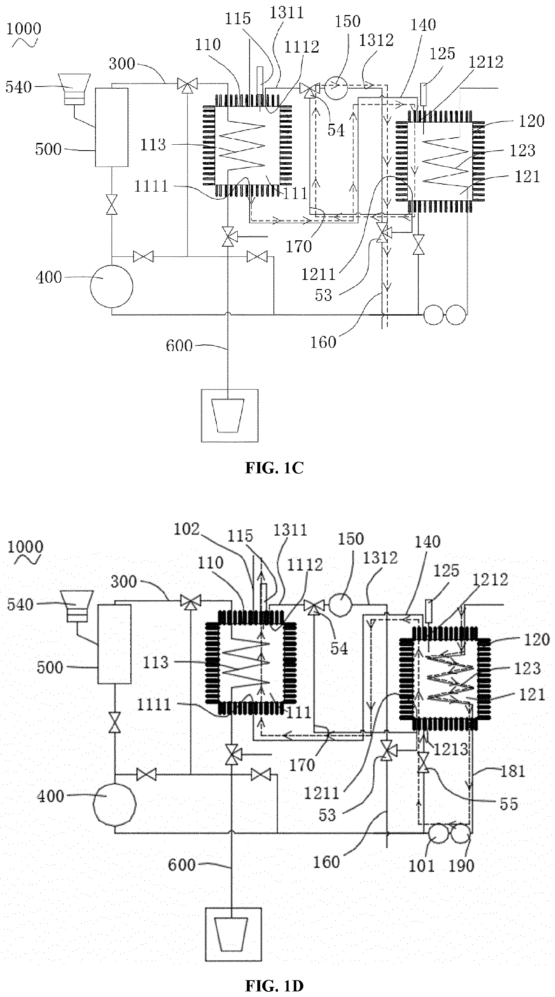

Please refer to FIG.1A and FIG. 1C together. In some embodiments, the beverage device 1000 further comprises a first medium discharge pipeline 160 that is controllably connected to the first cooling medium pipeline 130, and a discharge auxiliary pipeline 170 that is controllably connected to the circulation driving mechanism 150, with the discharge auxiliary pipeline 170 being connected to the second cooling medium channel 121. The beverage device 1000 is capable of controlling the circulation driving mechanism 150 to drive the cooling medium in the first cooling medium channel 111 to flow through the second cooling medium pipeline 140 into the second cooling medium channel 121, and the cooling medium in the second cooling medium channel 121 flows through the circulation driving mechanism 150 and the first cooling medium pipeline 130, flowing out from the first medium discharge pipeline 160.

Additionally, in this embodiment, based on the positional arrangement of the inlet 1111 and outlet 1112 of the first cooling medium channel 111, and the positional arrangement of the inlet 1211 and outlet 1212 of the second cooling medium channel 121, the cooling medium in the circulation loop can be emptied through the first medium discharge pipeline 160. Thus, it's convenient to empty the cooling medium from the circulation loop during long periods of non-use or when transporting the beverage device.

In this embodiment, the first medium discharge pipeline 160 connects to the first cooling medium pipeline 130, and along the flow direction of cooling medium in the first cooling medium pipeline 130, the first medium discharge pipeline 160 is located downstream of the circulation driving mechanism 150; a discharge flow control valve 53 is installed at the connection point between the first medium discharge pipeline 160 and the first cooling medium pipeline 130.

The beverage device 1000 selectively controls the discharge flow control valve 53 to connect the first cooling medium pipeline 130 with the first medium discharge pipeline 160, or connect the first cooling medium pipeline 130 on both sides of the discharge flow control valve 53. In other words, the beverage device 1000 controls through the discharge flow control valve 53 whether the cooling medium flowing to the valve continues along the first cooling medium pipeline 130 or flows to the first medium discharge pipeline 160.

In this embodiment, the discharge auxiliary pipeline 170 connects to the first cooling medium pipeline 130, and along the flow direction of cooling medium in the first cooling medium pipeline 130, the connection point is located upstream of the circulation driving mechanism 150. The discharge auxiliary pipeline 170 is also connected to the second cooling medium channel 121.

The discharge auxiliary pipeline 170 is equipped with an auxiliary discharge valve 54 at its connection point with the first cooling medium pipeline 130. The auxiliary discharge valve 54 divides the first cooling medium pipeline 130 into a first section 1311 and a second section 1312. The first section 1311 is located between the auxiliary discharge valve 54 and the first cooling unit 110. The second section 1312 is located between the auxiliary discharge valve 54 and the discharge flow control valve 53. The beverage device 1000 selectively controls through the auxiliary discharge valve 54 to either connect the first section 1311 and second section 1312 of the first cooling medium pipeline 130, or connect the discharge auxiliary pipeline 170 with the second section 1312 of the first cooling medium pipeline 130.

In some embodiments, both the discharge flow control valve 53 and auxiliary discharge valve 54 are three-way valves. In other feasible embodiments, they are not limited to three-way valves but can be any other valve structure that achieves the same effect.

In a specific scenario example, the beverage device 1000 will actively discharge the cooling medium from the first cooling unit 110 and the second cooling unit 120 when it has been idle for longer than a preset time threshold or when it receives a cooling medium emptying command, to prevent bacterial growth in the cooling medium.

Specifically, the beverage device 1000 is capable of controlling the discharge flow control valve 53 to connect the first cooling medium pipeline 130 with the first medium discharge pipeline 160, control the auxiliary discharge valve 54 to connect the discharge auxiliary pipeline 170 with the second section 1312 of the first cooling medium pipeline 130, enabling connection between the discharge auxiliary pipeline 170 and the first medium discharge pipeline 160, and control the auxiliary discharge valve 54 to disconnect the first section 1311 and second section 1312 of the first cooling medium pipeline 130.

Furthermore, the beverage device 1000 is capable of activating the circulation driving mechanism 150 to drive the cooling medium from the first cooling medium channel 111 through the second cooling medium pipeline 140 to the second cooling medium channel 121, then through the discharge auxiliary pipeline 170 to the auxiliary discharge valve 54, continuing along the second section 1312 of the first cooling medium pipeline 130, through the discharge flow control valve 53, and out through the first medium discharge pipeline 160. Specifically, this forms the water flow direction shown as dashed lines with arrows in FIG. 1C.

Specifically, during cooling medium discharge, the cooling medium in the first cooling medium channel 111 flows from its inlet 1111 to the second cooling medium pipeline 140 and then to the second cooling unit 120. With the inlet 1111 located at the bottom end of the first cooling unit 110, nearly all cooling medium in the first cooling medium channel 111 can be discharged. Similarly, the cooling medium in the second cooling unit 120 flows from the inlet 1211 of the second cooling medium channel 121 to the discharge auxiliary pipeline 170. With the inlet 1211 located at the bottom end of the second cooling unit 120, nearly all cooling medium in the second cooling medium channel 121 can also be discharged. This facilitates complete emptying of the cooling medium from the circulation loop.

Of course, the above cooling medium discharge process is limited to this embodiment. In other feasible embodiments, due to different positioning of the first medium discharge pipeline 160 and other components, the cooling medium discharge process needs to be adaptively adjusted according to specific technical solutions.

Please refer to FIG. 1D. In some embodiments, the second cooling medium channel 121 has a first water supply port 1213 located at the bottom end of the second cooling unit 120. The beverage device 1000 controllably connects the first water supply pipeline 181 with the first water supply port 1213, allowing water from the first water supply pipeline 181 to enter the second cooling medium channel 121 as cooling medium. Additionally, the water from the first water supply pipeline 181 can flow through the second cooling medium channel 121 and the second cooling medium pipeline 140 to enter the first cooling medium channel 111 as cooling medium.

Specifically, the beverage device 1000 controllably directs water from the first water supply pipeline 181 to flow into the second cooling medium channel 121 through the first water supply port 1213 as cooling medium. Once the cooling medium in the second cooling medium channel 121 reaches a preset level, for example when it's full, continued water supply through the first water supply pipeline 181 will cause the cooling medium in the second cooling medium channel 121 to flow into the first cooling medium channel 111 through the second cooling medium pipeline 140.

In this embodiment, the beverage device 1000 further comprises a second medium discharge pipeline 102 installed on the first cooling unit 110, a temperature monitoring unit 125 installed on the second cooling unit 120, and a water supply driving mechanism 190 connected in the first water supply pipeline 181. The temperature monitoring unit 125 is used to detect and obtain temperature parameters of the cooling medium in the second cooling medium channel 121.

When the temperature parameter of the cooling medium exceeds a preset temperature threshold, the beverage device controls the water supply driving mechanism 190 to drive water from the first water supply pipeline 181 to enter the second cooling medium channel 121 as cooling medium, forcing the cooling medium in the second cooling medium channel 121 and the first cooling medium channel 111 to flow out through the second medium discharge pipeline 102. In other words, cooling medium can be supplied to the circulation loop through the first water supply pipeline 181, gradually discharging the higher-temperature cooling medium in the circulation loop through the second medium discharge pipeline 102, thus at least partially replacing the cooling medium in the circulation loop.

When initially injecting cooling medium into the circulation loop, the water flow direction is as shown as dashed lines in FIG. 1D. During initial injection, a small amount of cooling medium can be discharged through the second medium discharge pipeline 102 to ensure the circulation loop is fully filled with cooling medium.

In this embodiment, the water supply driving mechanism 190 is installed on the first water supply pipeline 181, increasing water pressure after it passes through. The second cooling channel 123 is located upstream of the water supply driving mechanism 190, so water entering the second cooling channel 123 hasn't been pressurized by the water supply driving mechanism 190, thus reducing water impact on the second cooling channel 123.

In this embodiment, a valve 55 is installed between the first water supply pipeline 181 and the first water supply port 1213 of the second cooling medium channel 121. The beverage device 1000 controls a connection between the first water supply pipeline 181 and the first water supply port 1213 through the valve 55.

In a specific scenario example, when the beverage device 1000 is initially installed after manufacturing, the first cooling unit 110 and second cooling unit 120 are empty, containing no cooling medium. The beverage device 1000 is capable of controlling the valve 55 to connect the first water supply pipeline 181 with the first water supply port 1213 of the second cooling medium channel 121, and activating the water supply driving mechanism 190 to drive water as cooling medium to enter the second cooling medium channel 121 through the first water supply port 1213. After filling the second cooling medium channel 121, the cooling medium will flow through the second cooling medium pipeline 140 into the first cooling medium channel 111, eventually filling it.

During the process of water entering the second cooling medium channel 121 and first cooling medium channel 111, air in these channels will be discharged through the second medium discharge pipeline 102, thereby forming the water flow direction shown as the dashed lines with arrows in FIG. 1D. After the first cooling medium channel 111 is filled with cooling medium, the beverage device 1000 stops the water supply driving mechanism 190 and closes the valve 55 to disconnect the first water supply pipeline 181 from the first water supply port 1213.

In a specific scenario example, after the beverage device 1000 produces beverages within the second temperature range, it will form the water flow direction shown in FIG. 1B to exchange cooling medium between the first cooling unit 110 and second cooling unit 120. However, under the condition that the beverage device 1000 has continuously produced multiple cups of beverage within the second temperature range in a short time, and the temperature parameter feedback from the temperature monitoring unit 125 indicates that the cooling medium temperature in the second cooling unit 120 has exceeded the preset temperature threshold, it will control the valve 55 to connect the first water supply pipeline 181 with the first water supply port 1213 of the second cooling medium channel 121, and activate the water supply driving mechanism 190 to drive water as cooling medium to enter the second cooling medium channel 121 through the first water supply port 1213. This displaces the higher-temperature cooling medium from the second cooling medium channel 121 through the second cooling medium pipeline 140 to the first cooling medium channel 111, and the higher-temperature cooling medium in the first cooling medium channel 111 flows out through the second medium discharge pipeline 102, forming the water flow direction shown as the dashed lines in FIG. 1D.

After the higher-temperature cooling medium in the first cooling medium channel 111 has been displaced by lower-temperature cooling medium, the beverage device 1000 will stop the water supply driving mechanism 190, close the valve 55, and disconnect the first water supply pipeline 181 from the first water supply port 1213.

In some embodiments, the temperature monitoring unit 125 of the beverage device 1000 is located at the top of the second cooling unit 120 to monitor the temperature of the cooling medium at the top of the second cooling medium channel 121, i.e., monitoring the temperature of the cooling medium after being cooled by the second cooling unit 120. This allows replacement only when the cooling medium can no longer be cooled to the preset temperature threshold, ensuring full utilization of the cooling medium.

In some embodiments, both the first cooling unit 110 and second cooling unit 120 have cooling fins on their outer surfaces to enhance their heat dissipation effect. Of course, cooling mechanisms such as fans can also be installed on the outer surfaces of the first cooling unit and second cooling unit to improve their cooling effect.

In some embodiments, the beverage device 100 further has a flow meter 101 installed on the first water supply pipeline 181 downstream of the water supply driving mechanism 190, enabling measurement of the input cooling medium flow rate.

In some embodiments, the beverage device 1000 further comprises a cold water pipeline 800, with one end connected to the first water supply pipeline 181 and the other end connected to the beverage outlet 600, allowing cold water to be discharged through the beverage outlet. Specifically, cold water can be delivered to the beverage outlet 600 through the cold water pipeline 800 when cold water is needed or when cold water needs to be added to beverages.

For example, under the condition that the beverage device can make coffee, cold water can be added after making coffee concentrate to form lower-temperature coffee. In this embodiment, a valve 56 is installed between the cold water pipeline 800 and the beverage outlet 600. The beverage device 100 is capable of controlling a connection between the cold water pipeline 800 and beverage outlet 600 through the valve 56.

Optionally, the beverage device 1000 comprises a control unit for controlling its operation. Specifically, the control unit controls the operation of components such as the heating unit 400, brewing unit 500, circulation driving mechanism 150, and water supply driving mechanism 190.

Specifically, the control unit can be a PCB circuit board assembly. The connection between the control unit and components such as the heating unit 400, brewing unit 500, circulation driving mechanism 150, and water supply driving mechanism 190 can be either wireless or wired, with no specific limitation here.

Optionally, the beverage device 1000 is a coffee machine.

Further optionally, the beverage device 1000 comprises a grinding device 540 for grinding coffee beans into coffee powder suitable for brewing coffee.

Of course, in other feasible embodiments, the beverage device is not limited to coffee machines.

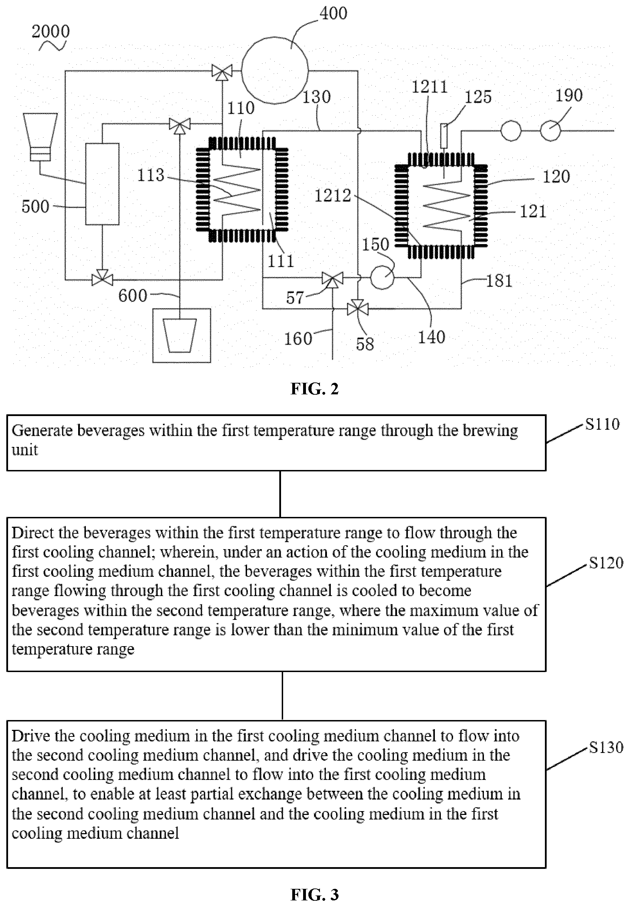

Referring to FIG.2, in another embodiment of the present application, the beverage device 2000 differs from beverage device 1000 in that the inlet 1211 of the second cooling medium channel 121 is located at a top end of the second cooling unit 120, while the outlet 1212 is located at a bottom end. When the circulation driving mechanism 150 is operating during the cooling process, the cooling medium can flow from the top to the bottom of the second cooling medium channel 121, enabling more thorough cooling of the cooling medium and better cooling effectiveness.

In this embodiment, the circulation driving mechanism 150 is installed on the second cooling medium pipeline 140; the beverage device 2000 further comprises a first medium discharge pipeline 160 that can be controllably connected to the second cooling medium pipeline 140; the first cooling medium pipeline 130 extends from the outlet 1112 of the first cooling medium channel 111 into its interior and is positioned close to the bottom wall inside the first cooling medium channel 111.

The beverage device 2000 is capable of controlling the circulation driving mechanism 150 to drive the cooling medium in the second cooling medium channel 121 to flow through its outlet 1212 and out through the first medium discharge pipeline 160; meanwhile, at least part of the cooling medium in the first cooling medium channel 111 can flow through the first cooling medium pipeline 130 into the second cooling medium channel 121. This enables emptying of the cooling medium from the circulation loop.

Specifically, in this embodiment, the first cooling medium pipeline 130 extends from the outlet 1112 of the first cooling medium channel 111 into an interior of the first cooling medium channel 111 and is positioned close to its bottom wall. Therefore, the cooling medium in the first cooling medium channel 111 can flow through the first cooling medium pipeline 130 to the second cooling medium channel 121. The cooling medium in the second cooling medium channel 121 is discharged after flowing through the second cooling medium pipeline 140 and the first medium discharge pipeline 160, thus emptying the cooling medium from the circulation loop.

In this embodiment, the first medium discharge pipeline 160 connects to the second cooling medium pipeline 140, and along the flow direction of cooling medium in the second cooling medium pipeline 140, the first medium discharge pipeline 160 is located downstream of the circulation driving mechanism 150. A circulation discharge control valve 57 is installed at the connection point between the first medium discharge pipeline 160 and the second cooling medium pipeline 140. The beverage device 2000 selectively controls through the circulation discharge control valve 57 to either connect the upstream section of the second cooling medium pipeline 140 with the first medium discharge pipeline 160, or connect the sections of the second cooling medium pipeline 140 on both sides of the valve.

In other words, the beverage device 2000 controls through the circulation discharge control valve 57 whether the water flow reaching the valve continues along the second cooling medium pipeline 140 or flows to the first medium discharge pipeline 160.

Specifically, after passing through the circulation driving mechanism 150, the cooling medium continues flowing along the second cooling medium pipeline 140 to the circulation discharge control valve 57, which selectively controls the cooling medium to flow to the first medium discharge pipeline 160 for discharge. During this process, the suction force of the circulation driving mechanism 150 drives the discharge of cooling medium from the circulation loop.

Specifically in this embodiment, the circulation discharge control valve 57 is a three-way valve. In other feasible embodiments, it is not limited to a three-way valve but can be any other valve structure that achieves the same effect.

The beverage device 2000 is capable of controllably connecting the first water supply pipeline 181 with the first cooling medium channel 111, allowing water from the first water supply pipeline 181 to enter the first cooling medium channel 111 as cooling medium; and the water from the first water supply pipeline 181 can flow through the first cooling medium channel 111 and the first cooling medium pipeline 130 to enter the second cooling medium channel 121 as cooling medium.

Specifically, the beverage device 2000 is capable of controlling water from the first water supply pipeline 181 to enter the first cooling medium channel 111 as cooling medium; after the cooling medium in the first cooling medium channel 111 reaches a preset level, continued water supply through the first water supply pipeline 181 causes the cooling medium in the first cooling medium channel 111 to enter the second cooling medium channel 121 through the first cooling medium pipeline 130.

In this embodiment, the first water supply pipeline 181 connects to the second cooling medium pipeline 140. The beverage device 2000 further comprises a water inlet control valve 58, which controls the connection between the first water supply pipeline 181 and the second cooling medium pipeline 140. That is, the cooling medium enters the first cooling medium channel 111 through its inlet 1111.

The beverage device 2000 further comprises a heating unit 400. The inlet of the heating unit 400 connects to the water inlet control valve 58. The beverage device 2000 controls through the water inlet control valve 58 to either supply water to the heating unit 400 or to the first and second cooling medium channels 111 and 121.

Water heated by the heating unit 400 is capable of being controllably directed into the brewing unit 500. The beverage device 2000 is capable of controlling beverages within the first temperature range flowing from the brewing unit 500 to either flow directly out from the beverage outlet 600, or flow into the first cooling channel 113 where they are cooled to become beverages within the second temperature range before flowing out from the beverage outlet 600.

In other feasible embodiments, the first cooling medium channel 111 can also have a water supply port connected to the first water supply pipeline 181, allowing cooling medium to be delivered into the first cooling medium channel 111 through this port.

In this embodiment, the beverage device 2000 further comprises a temperature monitoring unit 125 installed in the second cooling unit 120 and a water supply driving mechanism 190 connected in the first water supply pipeline 181. The temperature monitoring unit 125 is used to monitor and obtain temperature parameters of the cooling medium in the second cooling medium channel 121.

When the temperature parameter of the cooling medium in the second cooling medium channel 121 exceeds a preset temperature threshold, the beverage device 2000 controls the water supply driving mechanism 190 to drive water from the first water supply pipeline 181 to enter the first cooling medium channel 111 as cooling medium, driving the cooling medium in the first cooling medium channel 111 to flow toward the second cooling medium channel 121, and causing the cooling medium in the second cooling medium channel 121 to flow out through the first medium discharge pipeline 160, thus partially replacing the cooling medium in the circulation loop.

Please refer to FIG.3. An embodiment of the present application further provides a control method for a beverage device. The beverage device comprises a brewing unit, a first cooling unit, and a second cooling unit; the first cooling unit has a first cooling channel and a first cooling medium channel in thermal contact; the second cooling unit has a second cooling channel and a second cooling medium channel in thermal contact. The specific water circuit structure of the beverage device can refer to FIG. 1A and FIG. 2. The control method comprises the following steps:
Step S110: Generate beverages within the first temperature range through the brewing unit.

Specifically, the beverage device 1000 controls the valve 50 to connect, valves 51 and 56 to disconnect, activates the water supply driving mechanism 190 to drive water through the second water supply pipeline 182 into the heating unit 400, and the heated water flows through the first hot water pipeline 200 and the valve 50 into the brewing unit 500 to produce beverages within the first temperature range.

Step S120: Direct the beverages within the first temperature range to flow through the first cooling channel; wherein, under an action of the cooling medium in the first cooling medium channel, the beverages within the first temperature range flowing through the first cooling channel are cooled to become beverages within the second temperature range, where the maximum value of the second temperature range is lower than the minimum value of the first temperature range.

Specifically, the beverage device 1000 controls the hot beverages flow control valve 52 to connect the first liquid outlet pipeline 300 with the inlet of the first cooling channel 113, allowing hot beverages flowing from the brewing unit 500 into the first liquid outlet pipeline 300 to enter the first cooling channel 113.

Step S130: Drive the cooling medium in the first cooling medium channel to flow into the second cooling medium channel, and drive the cooling medium in the second cooling medium channel to flow into the first cooling medium channel, to enable at least partial exchange between the cooling medium in the second cooling medium channel and the cooling medium in the first cooling medium channel.

Specifically, after preparing one or several beverages within the second temperature range, the beverage device 1000 controls and activates the circulation driving mechanism 150 to drive the cooling medium from the first cooling unit 110 toward the second cooling unit 120, and drive the cooling medium from the second cooling unit 120 toward the first cooling unit 110, forming the water flow direction shown in FIG. 1B, achieving at least partial exchange of cooling medium between the first cooling unit 110 and second cooling unit 120.

In the above method, the beverage device uses two cooling units - the first cooling unit and the second cooling unit. The cooling medium in the second cooling medium channel can be at least partially exchanged with the cooling medium in the first cooling medium channel, thus lowering the temperature of the cooling medium in the first cooling unit, reducing the frequency of cooling medium replacement and minimizing cooling medium waste.

In some embodiments, the step of driving the cooling medium exchange between the first and second cooling medium channels comprises: activating the circulation driving mechanism connected between the first and second cooling medium channels through pipelines, with the circulation driving mechanism serving as a power source to drive the cooling medium flow between the channels.

The process of cooling medium circulating between the first and second cooling medium channels is gradually achieving the exchange of cooling medium between the first and second cooling medium channels.

Optionally, the beverage device 1000 controls the working duration of the circulation driving mechanism 150 to fall within the range of 12 seconds to 100 seconds. This ensures effective cooling of the first cooling medium while avoiding reduced lifespan of the cooling mechanism due to excessive circulation time.

Specifically, the working duration after activating the circulation driving mechanism can be any value within the range of 12 seconds to 100 seconds, such as 12, 15, 18, 20, 25, 30, 35, 40, 45, 50, 55, 60, 65, 70, 75, 80, 85, 90, 95, or 100 seconds. Of course, in other feasible embodiments, the working duration is not limited to this range and can be less than 12 seconds or more than 100 seconds.

In some embodiments, when receiving a medium emptying instruction or when the device's idle time exceeds a preset temperature threshold, the beverage device connects the outlet of the second cooling medium channel with the first medium discharge pipeline; and drive the cooling medium discharge process.

This prevents bacterial growth from prolonged cooling medium retention in the channels. Additionally, when transporting the beverage device, the cooling medium can be emptied to prevent leakage during transport and reduce the device's weight.

In some embodiments, the beverage device further comprises a second medium discharge pipeline installed on the first cooling unit; the control method further comprises: monitoring the temperature of the cooling medium in the second cooling medium channel to obtain temperature parameters; when the temperature parameter is higher than or equal to a preset temperature threshold, driving water from the first water supply pipeline to flow into both cooling medium channels as cooling medium, forcing the existing cooling medium to flow out through the second medium discharge pipeline.

When the temperature parameter exceeds or equals the preset temperature threshold, the beverage device partially replaces the cooling medium in both cooling medium channels to maintain a lower temperature of the cooling medium, thereby ensuring the cooling effectiveness of the first cooling unit.

In some embodiments, the beverage device further comprises a first water supply pipeline connected to the outlet of the second cooling channel. The control method further comprises: connecting the first water supply pipeline with the second cooling medium channel and controlling the water supply driving mechanism connected to the first water supply pipeline to drive water as cooling medium into the second cooling medium channel, and then through the cooling medium pipeline between the first and second cooling medium channels into the first cooling medium channel.

Alternatively, the control method comprises: connecting the first water supply pipeline with the first cooling medium channel and controlling the water supply driving mechanism to drive water as cooling medium into the first cooling medium channel, and then through the cooling medium pipeline into the second cooling medium channel.

In this embodiment, the beverage device can use water from the first water supply pipeline as cooling medium for both cooling medium channels. This means that when water supply is available, cooling medium can be provided to both channels without requiring additional cooling medium sources.

Please refer to FIG. 1A. In a specific scenario example, taking the beverage device 1000 as a coffee machine, after factory production and installation at the user's site, both of the first cooling unit 110 and the second cooling unit 120 are empty, and containing no cooling medium.

After power-up, the beverage device 1000 controls the valve 55 to connect the first water supply pipeline 181 with the first water supply port 1213 of the second cooling medium channel 121, and activates the water supply driving mechanism 190 to drive water as cooling medium to enter through the first water supply port 1213. After filling the second cooling medium channel 121, the cooling medium flows through the second cooling medium pipeline 140 into the first cooling medium channel 111, eventually filling it completely.

During the process when water enters the first cooling medium channel 111, air in both cooling medium channels is discharged through the second medium discharge pipeline 102, forming the water flow direction shown as dashed lines with arrows in FIG. 1D. After the first cooling medium channel 111 is filled, the beverage device 1000 stops the water supply driving mechanism 190 and close the valve 55 to disconnect the first water supply pipeline 181 from the first water supply port 1213.

At this point, the beverage device 1000 enters standby mode, ready to execute beverage preparation functions upon receiving instructions. For example, when receiving an instruction to prepare a cold "espresso", the beverage device 1000 controls the valve 50 to connect the hot water outlet of the heating unit 400 with the liquid inlet 520 of the brewing unit 500, controls the hot beverage flow control the valve 52 to connect the first liquid outlet pipeline 300 with the inlet of the first cooling channel 113, and connects the outlet of the first cooling channel 113 with the beverage outlet 600.

The beverage device 1000 activates the water supply driving mechanism 190 to drive water through the second water supply pipeline 182 into the heating unit 400 for heating. The hot water then flows through the first hot water pipeline 200 and the valve 50 into the brewing chamber 510 through the liquid inlet 520, thereby producing hot coffee beverages within the first temperature range.

Furthermore, the hot coffee beverages flow from the liquid outlet 530 into the first liquid outlet pipeline 300, through the hot coffee beverages flow control valve 52 into the first cooling channel 113, where they are cooled to become beverages within the second temperature range before flowing out from the beverage outlet 600.

After completing cold beverage preparation, the beverage device 100 activate the circulation driving mechanism 150 to drive cooling medium exchange between the first and second cooling units, thereby forming the water flow direction shown in FIG. 1B. After the circulation driving mechanism 150 operates for a preset duration, it can be shut down, completing the cooling medium exchange.

After continuously preparing multiple cold beverages, when the temperature monitoring unit 125 indicates that the cooling medium temperature in the second cooling unit 120 exceeds the preset temperature threshold, the device controls the valve 55 to connect the first water supply pipeline 181 with the first water supply port 1213, and activates the water supply driving mechanism 190 to drive fresh water as cooling medium into the system. This displaces the higher-temperature cooling medium, forming the water flow direction shown in FIG. 1D.

The beverage device 1000 stops the water supply driving mechanism 190 and closes the valve 55 after the higher-temperature cooling medium has been replaced with lower-temperature cooling medium.

When the beverage device remains idle beyond a preset time threshold, it actively discharges cooling medium from both cooling units to prevent bacterial growth.

Specifically, the beverage device 1000 controls the discharge flow control valve 53 and auxiliary discharge valve 54 to establish the discharge path, and activates the circulation driving mechanism 150 to drive the cooling medium discharge process, forming the water flow direction shown as dashed lines with arrows in FIG. 1C.

During discharge, the cooling medium flows from the bottom-located inlets of both cooling units, enabling near-complete emptying of the cooling medium. The inlet 1111 being at the bottom of the first cooling unit 110 and the inlet 1211 at the bottom of the second cooling unit 120 facilitates complete drainage of the cooling medium from the circulation loop.

It should be understood that in the various embodiments in this application, the numerical order of the processes does not imply execution sequence. The execution sequence should be determined by their functionality and inherent logic, and should not impose any limitations on the implementation of the embodiments in this application.

It should be understood that the various embodiments described in this application can be implemented either individually or in combination, with no limitations imposed by the embodiments in this application.

Those skilled in the art can clearly understand that, for convenience and conciseness of description, the specific working processes of the systems, devices, and units described above can refer to the corresponding processes in the previous method embodiments, and will not be repeated here.

The above descriptions are only specific embodiments of this application, but the scope of protection of this application is not limited to these. Any technical personnel familiar with this technical field can easily conceive of changes or substitutions within the technical scope disclosed in this application, which should be covered within the protection scope of this application. Therefore, the protection scope of this application should be based on the protection scope of the claims.

## Claims

1. A beverage device (1000, 2000), being capable of generating beverages within a first temperature range and beverages within a second temperature range, the beverage device (1000, 2000) comprising:
a brewing unit (500), configured to brew raw materials into beverages within the first temperature range; the brewing unit (500) having a brewing chamber (510) for accommodating the raw materials; the brewing unit (500) further having a liquid inlet (520) and a liquid outlet (530); both the liquid inlet (520) and the liquid outlet (530) being in communication with the brewing chamber (510);
a first liquid outlet pipeline (300) being in communication with the liquid outlet (530) and configured to output the beverages within the first temperature range;
**characterized in that**: the beverage device (1000, 2000) further comprises a first cooling unit (110) and a second cooling unit (120);
wherein the first cooling unit (110) comprises a first cooling channel (113) and a first cooling medium channel (111), the first cooling channel (113) is in thermal contact with a cooling medium in the first cooling medium channel (111); an input port of the first cooling channel (113) is capable of communicating with the first liquid outlet pipeline (300); under an action of the cooling medium in the first cooling medium channel (111), the beverages within the first temperature range flowing through the first cooling channel (113) are cooled to become beverages within the second temperature range, wherein a maximum value of the second temperature range is lower than a minimum value of the first temperature range;
the second cooling unit (120) comprises a second cooling channel (123) and a second cooling medium channel (121), the second cooling channel (123) is in thermal contact with a cooling medium in the second cooling medium channel (121); liquid flowing through the second cooling channel (121) is capable of cooling the cooling medium in the second cooling medium channel (123);
an inlet (1111) of the first cooling medium channel (111) is capable of communicating with an outlet (1212) of the second cooling medium channel (121), an outlet (1112) of the first cooling medium channel (111) is capable of communicating with an inlet (1211) of the second cooling medium channel (121), so that the cooling medium in the second cooling medium channel (121) and the cooling medium in the first cooling medium channel (111) can be at least partially exchanged.

2. The beverage device according to claim 1, wherein the beverage device (1000, 2000) further comprises a heating unit (400); an inlet of the second cooling channel (123) is configured to connect to a water source; the beverage device (1000, 2000) further comprises a first water supply pipeline (181) and a second water supply pipeline (182) which are both in communication with an outlet of the second cooling channel (123); the first water supply pipeline (181) is configured to supply water to the first cooling medium channel (111) and the second cooling medium channel (121); the second water supply pipeline (182) is in communication with an inlet of the heating unit (400), and an outlet of the heating unit (400) is capable of communicating with the liquid inlet (520) of the brewing chamber (510).

3. The beverage device according to claim 2, wherein the beverage device (1000, 2000) further comprises a first hot water pipeline (200) and a second hot water pipeline (210) which are both in communication with the outlet of the heating unit (400), and a beverage outlet (600) capable of communicating with the first cooling channel (113); the first hot water pipeline (200) is in communication with the liquid inlet (520) of the brewing chamber (510); the second hot water pipeline (210) is in communication with the beverage outlet (600); wherein the beverage device (1000, 2000) is capable of controllably directing hot water heated by the heating unit (400) to flow through the first hot water pipeline (200) into the brewing chamber (510), or, directing the hot water to flow through the second hot water pipeline (210) and flow out from the beverage outlet (600).

4. The beverage device according to claim 3, wherein the beverage device (1000, 2000) further comprises a second liquid outlet pipeline (310) in communication with the beverage outlet (600), the beverage device (1000, 2000) is capable of controllably connecting the second liquid outlet pipeline (310) with the first liquid outlet pipeline (300), so that the beverages within the first temperature range flow through the first liquid outlet pipeline (300) and the second liquid outlet pipeline (310) to the beverage outlet (600); or, the beverage device (1000, 2000) is capable of controllably connecting the first liquid outlet pipeline (300) with the first cooling channel (113), and connect the first cooling channel (113) with the beverage outlet (600), so that the beverages within the first temperature range flow into the first cooling channel (113) and be cooled to become the beverages within the second temperature range, then the beverages within the second temperature range flow out from the beverage outlet (600).

5. The beverage device according to any one of claims 1 to 4, wherein the beverage device (1000, 2000) further comprises:
a first cooling medium pipeline (130), with one end in communication with the outlet (1112) of the first cooling medium channel (111) and another end in communication with the inlet (1211) of the second cooling medium channel (121);
a second cooling medium pipeline (140), with one end in communication with the outlet (1212) of the second cooling medium channel (121) and another end in communication with the inlet (1111) of the first cooling medium channel (111); wherein the first cooling medium channel (111), the first cooling medium pipeline (130), the second cooling medium channel (121) and the second cooling medium pipeline (140) form a circulation loop for the cooling medium; and
a circulation driving mechanism (150), configured to provide power for the circulation flow of the cooling medium in the circulation loop.

6. The beverage device according to claim 5, wherein the inlet (1111) of the first cooling medium channel (111) is located at a bottom end of the first cooling unit (110), the outlet (1112) of the first cooling medium channel (111) is located at a top end of the first cooling unit (110);
and/or, the inlet (1211) of the second cooling medium channel (121) is located at a bottom end of the second cooling unit (120), the outlet (1212) of the second cooling medium channel (121) is located at a top end of the second cooling unit (120).

7. The beverage device according to claim 6, wherein the circulation driving mechanism (150) is disposed on the first cooling medium pipeline (130); the beverage device (1000, 2000) further comprises a first medium discharge pipeline (160) controllably communicating with the first cooling medium pipeline (130), and a discharge auxiliary pipeline (170) controllably communicating with the circulation driving mechanism (150), and the discharge auxiliary pipeline (170) is in communication with the second cooling medium channel (121);
the beverage device (1000, 2000) is capable of controlling the circulation driving mechanism (150) to drive the cooling medium in the second cooling medium channel (121) to flow through the circulation driving mechanism (150) and the first cooling pipeline (130), and flow out from the first medium discharge pipeline (160), wherein the cooling medium in the first cooling medium channel (111) flows into the second cooling medium channel (121) through the second cooling medium pipeline (140).

8. The beverage device according to claim 6, wherein the second cooling medium channel (121) has a first water supply port (1213), the first water supply port (1213) is located at the bottom end of the second cooling unit (120); the beverage device (1000, 2000) controllably connects the first water supply pipeline (181) with the first water supply port (1213), so that water in the first water supply pipeline (181) is capable of entering the second cooling medium channel (121) as cooling medium; and, the water in the first water supply pipeline (181) is capable of flowing through the second cooling medium channel (121) and the second cooling medium pipeline (140) and then entering the first cooling medium channel (111) as cooling medium.

9. The beverage device according to claim 7, wherein the beverage device (1000, 2000) further comprises a second medium discharge pipeline (102) disposed on the first cooling unit (110), a temperature monitoring unit (125) disposed on the second cooling unit (120), and a water supply driving mechanism (190) connected in the first water supply pipeline (181); wherein the temperature monitoring unit (125) is configured to detect and obtain a temperature parameter of the cooling medium in the second cooling medium channel (121);
when the temperature parameter of the cooling medium is higher than a preset temperature threshold, the beverage device (1000, 2000) controls the water supply driving mechanism (190) to drive water in the first water supply pipeline (181) to enter the second cooling medium channel (121) as cooling medium, thereby driving the cooling medium in the second cooling medium channel (121) and the first cooling medium channel (111) to flow out from the second medium discharge pipeline (102).

10. The beverage device according to claim 5, wherein
the inlet (1111) of the first cooling medium channel (111) is located at a bottom end of the first cooling unit (110), the outlet (1112) of the first cooling medium channel (111) is located at a top end of the first cooling unit (110);
and/or, the inlet (1211) of the second cooling medium channel (121) is located at a top end of the second cooling unit (120), the outlet (1212) of the second cooling medium channel (121) is located at a bottom end of the second cooling unit (120);
preferably, the circulation driving mechanism (150) is disposed on the second cooling medium pipeline (140); the beverage device (1000, 2000) further comprises a first medium discharge pipeline (160) controllably communicating with the second cooling medium pipeline (140); the first cooling medium pipeline (130) extends from the outlet of the first cooling medium channel (111) into an interior of the first cooling medium channel (111), and is close to a bottom wall inside the first cooling medium channel (111);
the beverage device (1000, 2000) is capable of controlling the circulation driving mechanism (150) to drive the cooling medium of the second cooling medium channel (121) to flow through the outlet of the second cooling medium channel (121) and flow out from the first medium discharge pipeline (160); wherein at least part of the cooling medium in the first cooling medium channel (111) can flow through the first cooling medium pipeline (130) to enter the second cooling medium channel (121).

11. The beverage device according to claim 10, wherein the beverage device (1000, 2000) controllably connects the first water supply pipeline (181) with the first cooling medium channel (111), so that water in the first water supply pipeline (181) is capable of entering the first cooling medium channel (111) as cooling medium; and, the water in the first water supply pipeline (181) is capable of flowing through the first cooling medium channel (111) and the first cooling medium pipeline (130) and then entering the second cooling medium channel (121) as cooling medium.

12. The beverage device according to claim 11, wherein the beverage device (1000, 2000) further comprises a temperature monitoring unit (125) disposed in the second cooling unit (120), and a water supply driving mechanism (190) connected in the first water supply pipeline (181); wherein the temperature monitoring unit (125) is configured to monitor and obtain a temperature parameter of the cooling medium in the second cooling medium channel (121);
when the temperature parameter of the cooling medium in the second cooling medium channel (121) is higher than or equal to a preset temperature threshold, the beverage device (1000, 2000) controls the water supply driving mechanism (190) to drive water in the first water supply pipeline (181) to enter the first cooling medium channel (111) as cooling medium, to drive the cooling medium in the first cooling medium channel (111) to flow toward the second cooling medium channel (121), and cause the cooling medium in the second cooling medium channel (121) to flow out from the first medium discharge pipeline (160).

13. A control method for a beverage device, wherein the beverage device (1000, 2000) comprises a brewing unit (500), a first cooling unit (110) and a second cooling unit (120); the first cooling unit (110) having a first cooling channel (113) and a first cooling medium channel (111), the first cooling channel (113) and the first cooling medium channel (111) being in thermal contact; the second cooling unit (120) having a second cooling channel (123) and a second cooling medium channel (121), the second cooling channel (123) and the second cooling medium channel (121) being in thermal contact;
the control method comprises:
generating beverages within a first temperature range through the brewing unit (500);
**characterized in that**:
directing the beverages within the first temperature range to flow through the first cooling channel (113); wherein, under an action of the cooling medium in the first cooling medium channel (111), the beverages within the first temperature range flowing through the first cooling channel (113) are cooled to become beverages within a second temperature range, wherein a maximum value of the second temperature range is lower than a minimum value of the first temperature range;
driving the cooling medium in the first cooling medium channel (111) to flow into the second cooling medium channel (121), and driving the cooling medium in the second cooling medium channel (121) to flow into the first cooling medium channel (111), to enable at least partial exchange between the cooling medium in the second cooling medium channel (121) and the cooling medium in the first cooling medium channel (111).

14. The control method for the beverage device according to claim 13, wherein the step of driving the cooling medium in the first cooling medium channel (111) to flow into the second cooling medium channel (121), and driving the cooling medium in the second cooling medium channel (121) to flow into the first cooling medium channel (111), to enable at least partial exchange between the cooling medium in the second cooling medium channel (121) and the cooling medium in the first cooling medium channel (111) comprises:
activating a circulation driving mechanism (150) connected between the first cooling medium channel (111) and the second cooling medium channel (121) through pipelines, the circulation driving mechanism (150) serving as a power source to drive the cooling medium in the first cooling medium channel (111) to flow toward the second cooling medium channel (121), and drive the cooling medium in the second cooling medium channel (121) to flow toward the first cooling medium channel (111).

15. The control method for the beverage device according to claim 13, wherein the control method further comprises:
in case of receiving a medium emptying instruction or when the idle duration of the beverage device (1000, 2000) exceeds a preset time threshold, connecting an outlet of the second cooling medium channel (121) with a first medium discharge pipeline (160);
driving the cooling medium in the second cooling medium channel (121) to flow toward the first medium discharge pipeline (160), and driving the cooling medium in the first cooling medium channel (111) to flow toward the second cooling medium channel (121), to discharge the cooling medium from the first medium discharge pipeline (160);
preferably, the beverage device (1000, 2000) further comprises a second medium discharge pipeline (102) disposed on the first cooling unit (110); the control method further comprises:
monitoring the temperature of the cooling medium in the second cooling medium channel (121) to obtain a temperature parameter;
when the temperature parameter is higher than or equal to a preset temperature threshold, driving water in a first water supply pipeline (181) to flow into the second cooling medium channel (121) and the first cooling medium channel (111) as cooling medium, to drive the cooling medium in the first cooling medium channel (111) and the second cooling medium channel (121) to flow out from the second medium discharge pipeline (102).
